# EUROPEAN PATENT APPLICATION

(11) **EP 0 997 411 A1**
(43) Date of publication of application: **03.05.2000**
(21) Application number: 99308460.7
(22) Date of filing: 26.10.1999
(51) Int. Cl.: B65G 69/18

(54) **Powder receiving device**

(30) Priority: 26.10.1998 JP 30312498; 28.07.1999 US 362931
(71) Applicant: TSUKASA INDUSTRY CO., LTD., Handa-shi, Aichi 475 (JP)
(72) Inventor: Kato, Fumio, Handa-shi, Aichi-ken (JP); Kamimura, Shinsaku, Handa-shi, Aichi-ken (JP)
(74) Representative: Bryer, Kenneth Robert

(57) **Abstract**

A powder receiving device (1) has a loading chamber (40) with an integral dust collector. The dust collector preferably includes at least one bag filter (30) which filters air taken from above powder loaded into the loading chamber. The filtered air is then fed back into the loading chamber (40), into a hopper (16) where the powder is released to an external location, or out over the container (17a) from which the powder is loaded. This air flow provides for increased fluidity of the powder. The bag filter (30) is positioned facing the loading chamber (40), such that when a backwash means (14) sends a pulse of air into the bag filter (30), the collected powder is dropped back into the loading chamber (40). The powder receiving device (1) prevents dust and/or powder from escaping when powder is transferred from a container into the loading chamber, and provides for a clean workplace.

## Description

The present invention relates to a device for receiving various types of powder transported by a truck or the like. As used in this specification the term powder will be understood to include granular or particulate materials including, for example, grain or feed, sand and other bulk materials. The present invention relates particularly, although not exclusively, to a device for receiving powdered food products, feed, chemical products, and pharmaceutical products.

Powders are conventionally stored and shipped in bags or plastic containers. Alternatively, powders may be bulk shipped using a transport device such as a dump truck or a dump semi-trailer having a container with an upper section that can be opened and closed. Powders shipped in this manner arrive at a destination plant where they are transported with a particulate air transport system installed in the plant. The powders are received by a powder receiving device (receiver) and are then stored in a silo.

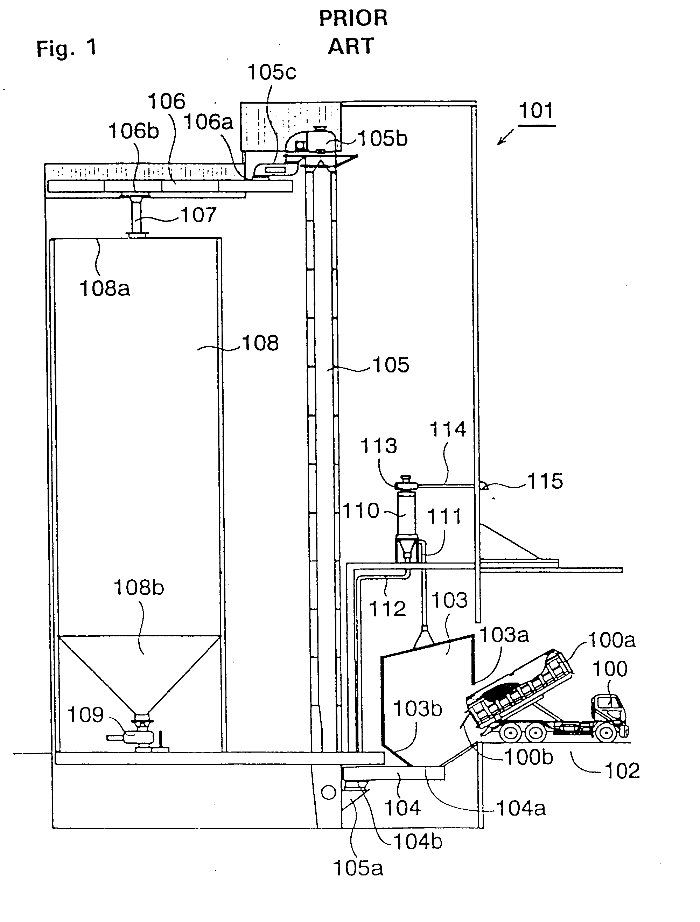

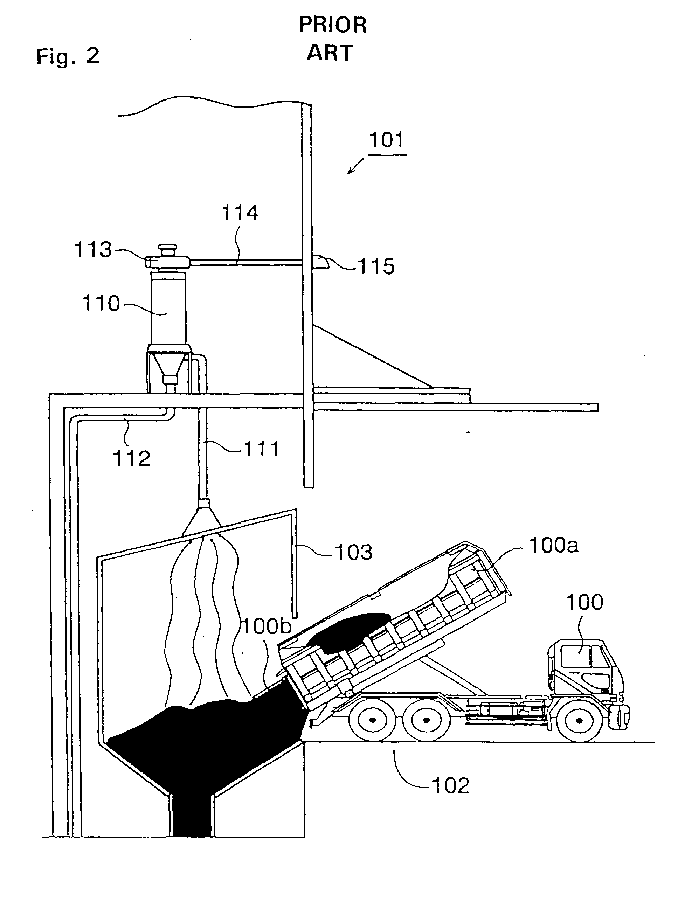

In conventional systems for air transporting a particulate material from a dump truck into a silo, (Figures 1 and 2), a dump truck 100, arriving at a plant 101, backs into a loading area 102 where a receiving hood 103, installed in loading area 102, has a loading opening 103a formed on a side surface. As the dump truck 100 backs toward the loading opening 103a the container 100a is lifted and the powder is loaded into the receiving hood 103 from the rear door 100b of the truck. The bottom of receiving hood 103 forms a hopper-style powder outlet opening 103b and a chain conveyor 104 is connected at the lower region of this opening to provide lateral transfer of particulate material. Powder loaded into the loading opening 103a drops from outlet opening 103b through a feeding opening 104a onto chain conveyer 104, and is laterally transferred by the chain conveyor 104 to transfer opening 104b. A loading hopper 105a, attached at a lower region of the transfer opening 104b, transfers the powder, vertically into a bulk conveyor 105 where it is transferred upward. At the uppermost section 105b of bulk conveyor 105, the powder drops through a supplying duct 105c connected to a supply opening 106a and is laterally transferred by a chain conveyor 106 to drop into a transfer opening 106b and via a connecting pipe 107 into the ceiling 108a of a silo 108. Powder stored inside the silo 108 is finally fed through an outlet gate 109 at the bottom of a hopper 108b into a supply pipeline (not shown in the figure).

In the conventional powder supply system described above, a considerable amount of material escapes in the form of dust when the powder is loaded in bulk into the receiver hood 103. Powder in the form of dust is blown out from the loading opening 103a and can enter back into the container 100a of dump truck 100, making it dirty, as well as into the work environment so that frequent cleaning of loading area 102 is required. The escape of powder can be restricted to some degree by providing a dust collector 110, attached at an upper floor of plant 101 and connected via a suction pipe 111 to the inside of receiver hood 103. Powder returns to the silo 108 from an outlet side of dust collector 110 through a circulation pipe 112. A suction fan 113, disposed on an upper surface of dust collector 110, takes air in through dust collector 110 and lets the air out through an outlet pipe 114 attached to a vent opening 115 of plant 101.

A disadvantage of the conventional system is that, since dust collector 110 is installed at a high position, extra space is required. Also, since outside air enters receiver hood 103, the internal suction power (pressure distribution) is uneven, resulting in stagnation of air and preventing efficient dust collection. Furthermore, powder retrieved in dust collector 110 must be returned to a supply line of the silo 108, allowing residual material inside circulation pipe 112 to decompose. If dust collector 110 is then used, different powders from other sources can become mixed with the desired powder, thus decreasing product value.

The present invention seeks to overcome these disadvantages and minimise the escape of powder in the loading section. The present invention also aims to prevent unevenness of pressure during dust collection, to allow dust to be efficiently collected, and to reduce pressure loss and contamination in the duct piping. The present invention further seeks to use an air blower that requires low suction power in the dust collector and which substantially prevents noise from the dust collector.

Accordingly the present invention provides, a powder receiving device comprising a housing having a loading chamber with a loading opening and a powder loading hopper , characterised in that the housing has a blower for recirculating air into the said chamber along an air path originating from within the said chamber.

In preferred embodiments of the present invention the said air path includes at least one filter for filtering particles of powder from the recirculating air.

In one embodiment of the present invention the said at least one filter comprises a bag filter.

In other embodiments the housing may have backwash means for directing pulsed jets of air on the said at least one bag filter, such that the said particles are dislodged from the said bag filter. In these embodiments powder is prevented from escaping when transferred from a container into the loading chamber.

In one embodiment the powder receiving device further comprises a housing in which there is provided air flow adjustment means for adjusting the path of filtered air. The air flow adjustment means may comprise an adjustable flap positioned in the air path of the said filtered air whereby the flap creates an upper air path and a lower air path within the housing.

In another embodiment the said upper air path may direct a first portion of air to an outlet located at an exterior and/or at an interior surface of the said housing so as to form an air curtain across the said powder loading opening. In this embodiment the air curtain may also direct air toward the said loading hopper such that the flow of powder into the said loading hopper is facilitated.

In yet another embodiment of the present invention the upper air path may also direct air to an outlet located on an exterior surface of the said housing so as to form an air path out of the housing and across the container such that the flow of powder from the container to the said loading chamber is facilitated.

In still another embodiment the lower air path may direct air to an outlet on an interior surface of the housing adjacent the said loading hopper such that the flow of powder into the said leading hopper is facilitated.

In one aspect of the invention a powder receiving device comprising a housing having a loading chamber with a loading opening and a powder loading hopper, characterised in that the housing has a blower for drawing air along an air path originating from within the said chamber and through a filter for filtering particles of said powder from said air and is positioned to allow dislodged particles to be released into the said powder loading hopper.

In some embodiments of the present invention the powder loading opening of the chamber includes sealing members opening and closing said powder loading opening. Preferably there are provided opening/closing gates which open and close on an exterior surface of the sealing members.

Embodiments of the present invention may also be provided with dust a protection sheet covering the said opening/closing gate and a sensor for detecting the approach of a container, together with control means for automatically opening and closing the powder loading opening when the container is detected. The opening and closing of the opening/closing gates may also be provided by an eccentric sprocket mechanism and may operate so as to allow the dust protection sheet to be smoothly folded when they are closed.

One advantage of the present invention over the prior art devices arises by providing at least one bag filter as a filter so that contamination due to adhesion of powder in internal flanges is eliminated. Thus, internally bent members can be used and flanges may project inward or outward. The result is a powder receiving device having a sleek exterior appearance which is easy to clean.

Another advantage of the present invention is that the gates protect the transfer operation from air currents. The dust protection sheet disposed on the opening/closing gates provides further improvement in sealing the transfer operation from air currents.

Still another advantage of the present invention is that the sensor and control means automates the powder receiving operation. Other advantages of the present invention will become apparent by the description which follows.

Various embodiments of the present invention will now be described by way of nonlimiting example with reference to the drawings in which
Figure 1 is a cross section of a powder receiving device according to conventional technology;
Figure 2 is an enlarged cross section drawing of a portion of the powder receiving device of Figure 1;
Figure 3 is a cross sectional right side view of the internal structure of a powder receiving device according to one embodiment of the present invention;
Figure 4 is a partially cut-away perspective drawing showing the internal structure of the powder receiving device of Figure 3;
Figure 5 is a cross sectional rear-view drawing of the powder receiving device of Figure 3;
Figure 6 is a front-view drawing of the powder receiving device of Figure 3;
Figure 7 is a plan drawing of the powder receiving device of Figure 3;
Figure 8 is a block diagram of the control unit system for the receiving device of Figure 3,
Figure 9 is a flowchart showing the operations performed by the control unit of Figure 8 during automated bulk shipping of powder;
Figure 10 is a partial cross sectional drawing of a truck approaching the powder receiving device;
Figure 11 is a partial cross sectional drawing of the rear of the truck entering a powder loading opening of the powder receiving device;
Figure 12 is a partial cross sectional drawing of the transfer from the truck to the powder receiving device;
Figure 13 is a partial cross sectional drawing of the truck moving away from the powder receiving device.

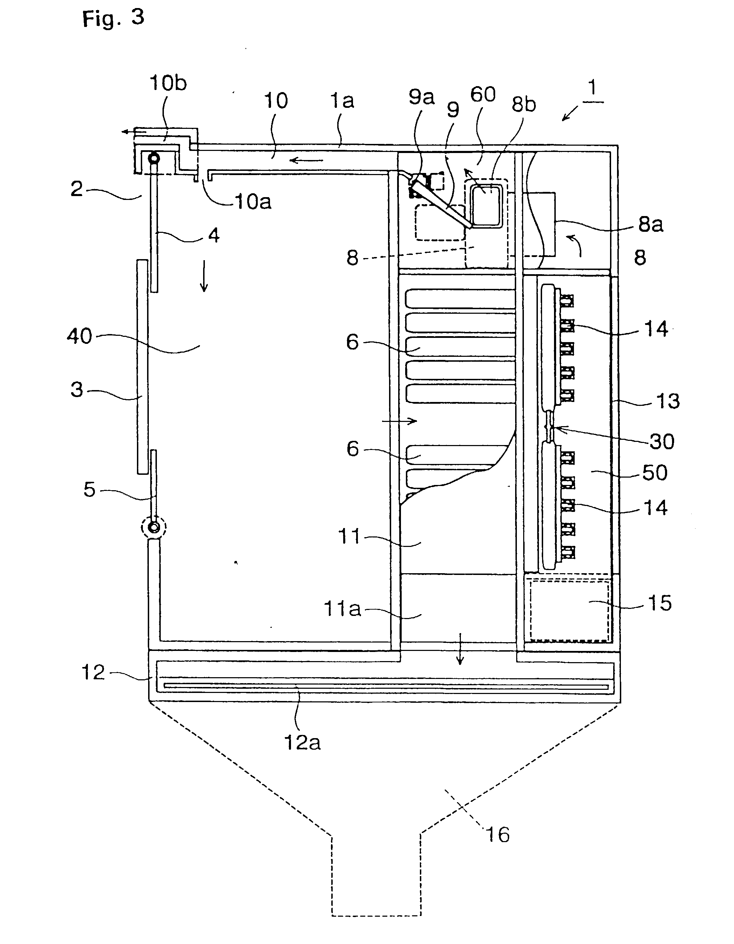

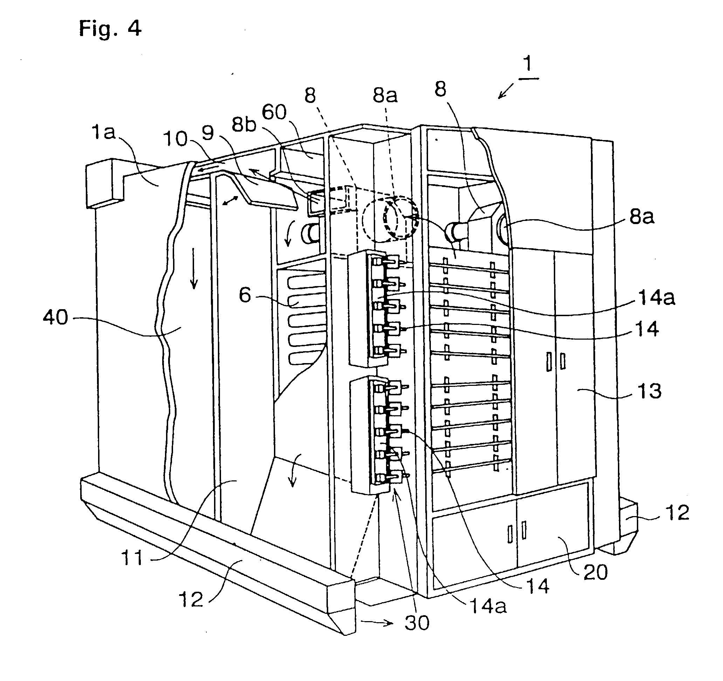

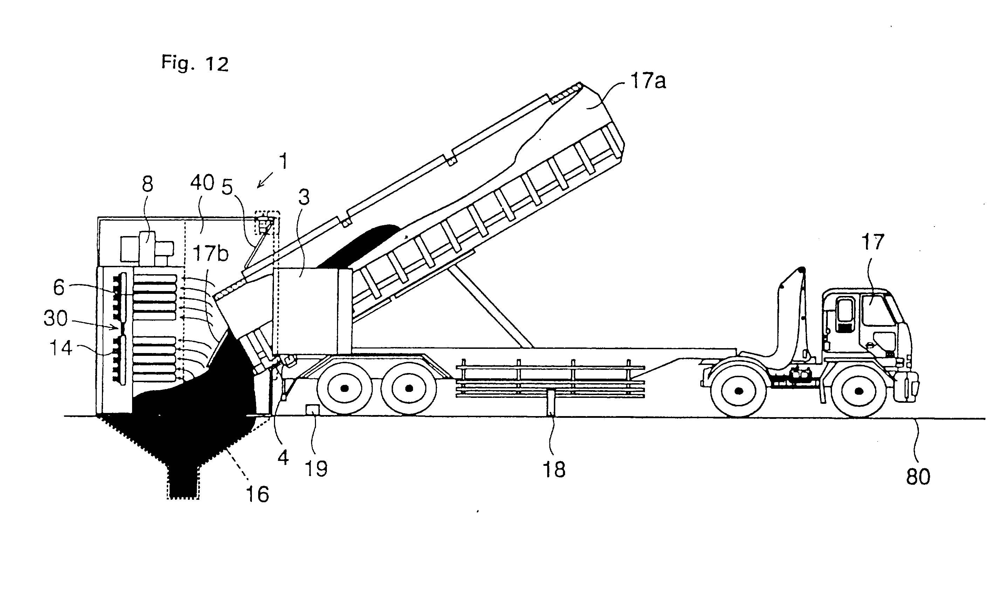

Referring to Figures 3 and 4, a device 1 for receiving powder includes a receiver hood 1a, in which plates, preferably aluminum plates, form a box. A front surface and a lower surface of receiver hood 1a are open. A loading opening 2, at a front surface of the powder receiving device 1, allows insertion of a rear section of a container 17a of a dump semi-trailer 17 (see also Figure 12).

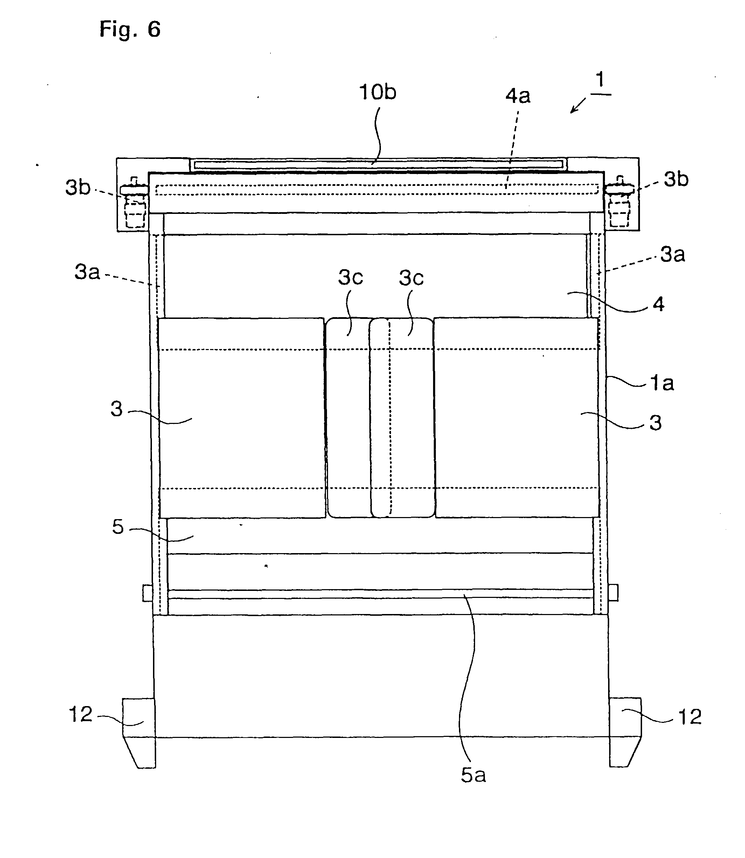

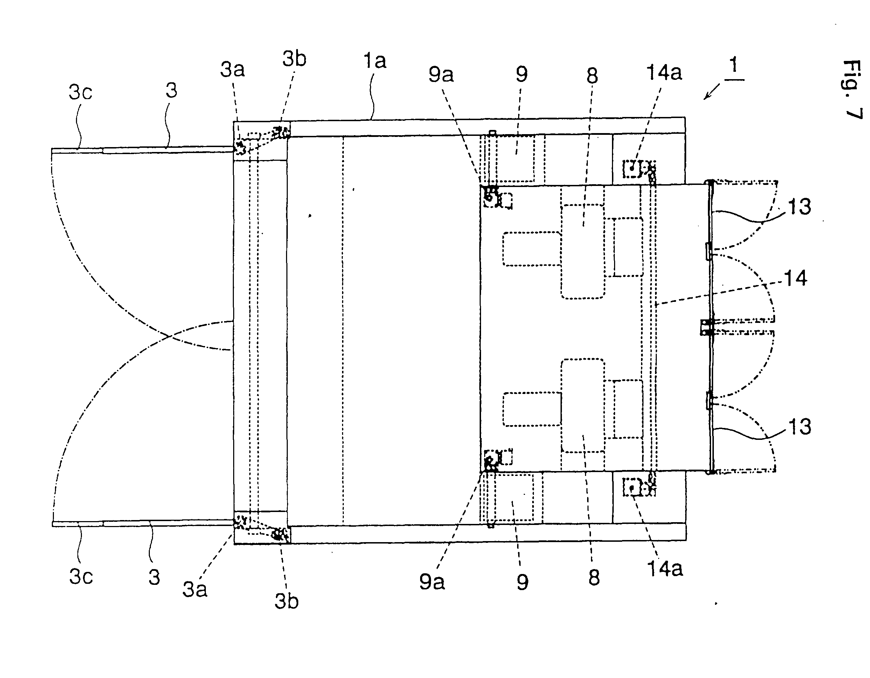

Referring to Figures 6 and 7, an automatic opening/closing gate 3, pivotably attached to left and right ends of the loading opening 2, has doors which open and close loading opening 2. Automatic opening/closing gate 3, sealing loading opening 2 from the left and right, is connected to an actuator 3b by a rotating shaft 3a. Actuator 3b opens and closes automatic opening/closing gate 3 using rotating shaft 3a as indicated by the dotted lines in Figure 7. A dust-protection vinyl sheet 3c is attached to an inner side at the end of each door of automatic opening/closing gate 3. Dust-protection vinyl sheet 3c operates integrally with each door of automatic opening/closing gate 3. When automatic opening /closing gate 3 is closed, ends of dust-protection vinyl sheets 3 fold to partially overlap. Automatic opening/closing gate 3 includes an eccentric sprocket mechanism (not shown) to stagger the timing by which the left and right doors open and close, allowing dust-protection vinyl sheet 3c to fold smoothly. A plate sealing member 4 is rotatably attached to an upper end surface of the open end of powder loading opening 2 with a shaft 4a. Sealing member 4 is preferably pulled vertically (hanging down) by a spring or the like. A plate-shaped sealing member 5 is pivotably attached to a lower end surface of the open end of loading opening 2. Sealing member 5 is pulled by a spring or the like to maintain an-upright position. A gap is formed between a lower end of sealing member 4 and an upper end of sealing member 5. Thus, when powder is not being received, outside air is shielded from the inner space of the receiving device 1. When powder is being received, the inner space of the receiving device 1 is continuous with the outside air.

Referring to Figures 3 to 5, four bag filters 30 are laterally positioned inside the powder receiving device 1. Multiple long filters 6 are horizontally attached to a cell plate 7 of bag filters 30. A retainer (not shown) having an elliptical lateral cross-section shape is covered with a long, thin, envelope filter cloth to form long filter 6. During dust collection, the filter cloth contracts and attracts powder. During pulsed flushing phases, the filter cloth expands to a roughly elliptical shape, filling a gap formed between adjacent filter cloths. The impact between adjacent filter cloths during flushing phases causes powder to be brushed off.

The bases of long filters 6 are attached to multiple holes in vertically positioned cell plate 7. The result is a grid in which cell plates 7 and long filters 6 are perpendicular to each other. Cell plates 7 partition an inner space of powder receiving device 1 into a loading chamber 40, where powder is loaded, and a suction chamber 50. Multiple suction motor fans 8, positioned above long filters 6, are used for dust collection. Suction motor fans 8 include air suction openings 8a and air vent openings 8b. Air suction openings 8a open into suction chamber 50. Air vent openings 8b open into vent chamber 60. Bag filters 30 include multiple flushing air jet nozzle pipes 14 laterally extended across the inside of suction chamber 50. Electromagnetic valves 14a feed high-pressure air pulses to air-jet nozzle pipes 14. Air filtered through long filters 6 is taken into air suction opening 8a from suction chamber 50. The air is then let out into vent chamber 60 through air vent opening 8b, where the air is branched out in two directions by a flap 9. Japanese patent number 2634042, entitled "Bag Filter Device", herein incorporated in its entirety by reference, describes a bag filter usable as bag filter 30 of the present invention.

Flap 9 is in front of air vent opening 8b which opens into vent chamber 60. Air led into air vent chamber 60 from air vent opening 8b branches out into either loading chamber 40 (to the left in Figure 4) or an air box 12 (down in Figure 4). The amount of air led into loading chamber 40 and air box 12 is controlled by adjusting flap 9. A horizontal air duct 10 horizontally guides air branched upward by flap 9. A portion of the upwardly branched air is introduced into an upper section of loading chamber 40. A cleaning air outlet 10a, at the end of horizontal air duct 10, opens into loading chamber 40 through an elongated curtain extending above the length of loader opening 2. An air curtain blowing outlet 10b is a laterally elongated duct disposed on an upper surface of the front side of powder receiving device 1. A portion of the air flowing through horizontal air duct 10 is blown into loading chamber 40, while most of the air is blown out from the receiving device 1 through air curtain blowing outlet 10b.

A vertical air duct 11 guides air branched downward by flap 9 inside receiver hood 1a. The air is blown downward from an outlet 11a of vertical air duct 11, scattered laterally inward at an elongate air box 12. Air box 12 is laterally positioned at a lower section of the receiving device 1. An air nozzle 12a releases the air scattered in air box 12 into a loading hopper disposed at an opening at a lower surface of powder receiving device 1. The air blown from air nozzle 12a and the air blown from air curtain blowing outlet 10b increase the fluidity of the powder inside loading chamber 40 when it is loaded. The blown air also provides cleaning for the inside of loading chamber 40 and powder loading hopper 16 after powder loading is complete.

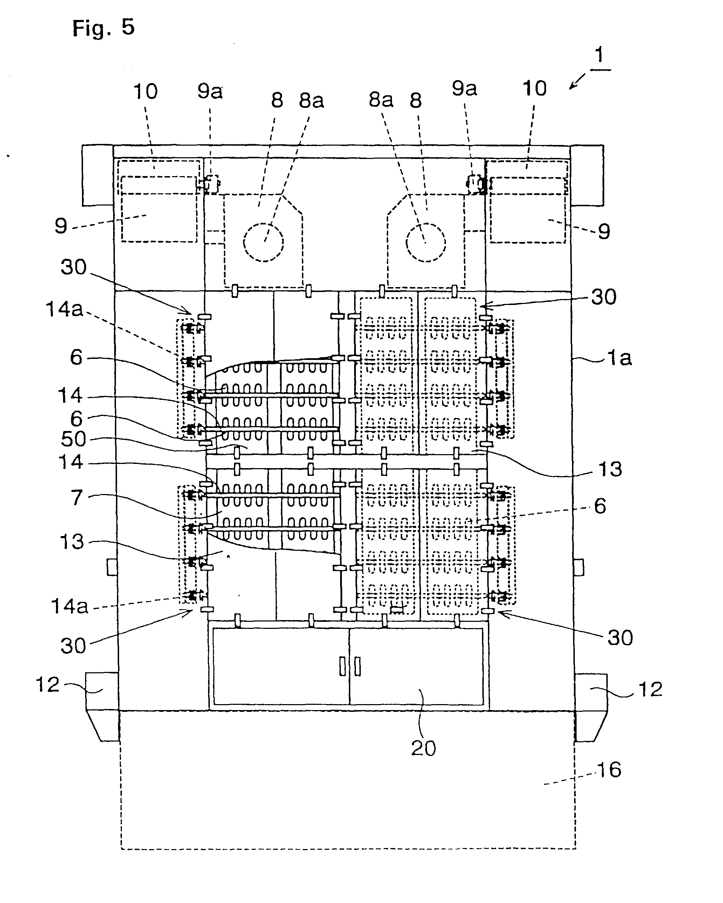

An inspection door 13 is installed at the back of the receiving device 1. Inspection door 13 is opened to replace filters 6 and to inspect the inside of the receiving device 1. Inspection door 13 is opened and closed as indicated by the dotted lines in Figure 7. An access door 20, positioned below inspection door 13, contains a control unit 15. Loading hopper 16 (see the dotted lines in Figure 3 and Figure 5) is connected to an opening on a bottom surface of powder receiving device 1. As described above, high-pressure air blown out from air nozzle 12a is blown inside loading hopper 16.

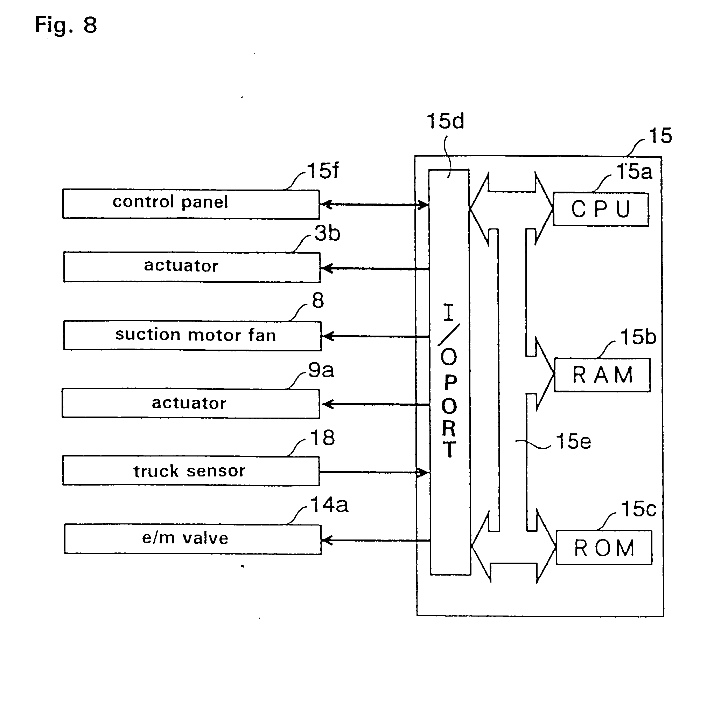

Referring to Figure 8, control unit 15 contains a microcomputer. The microcomputer includes a CPU 15a, RAM 15b, ROM 15c, an I/O port 15d, and a bus line 15e, connecting each of these elements. I/O port 15d connects to a control panel 15f, actuator 3b, suction motor fan 8, an actuator 9a, a truck sensor 18, and an electromagnetic valve 14a. Control unit 15 controls powder loading operations.

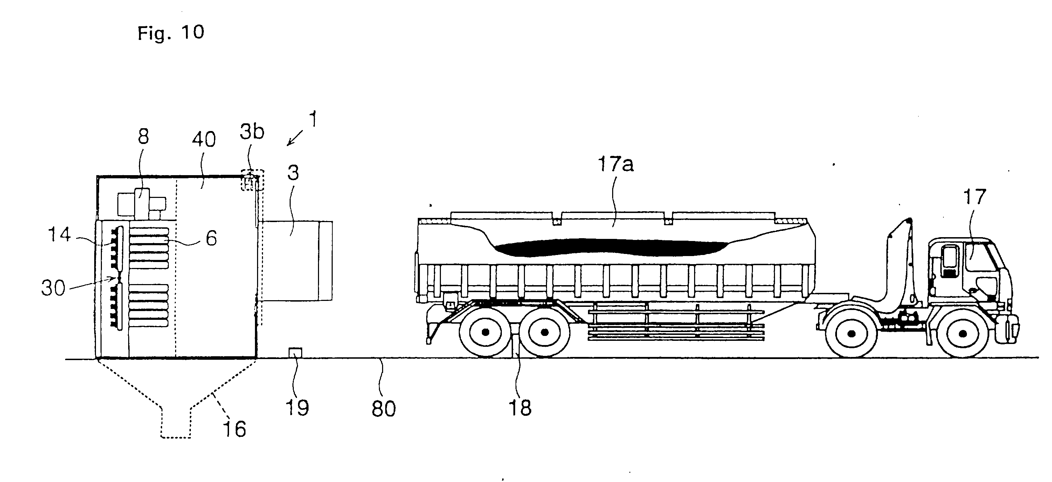

Referring to Figures 10 through 13, the following is a description of how the receiving device 1, according to a preferred embodiment of the present invention, is installed in a loading section of powder/feed plant 101 for receiving bulk shipments of powder.

First, truck sensor 18 is installed on the ground of a truck receiving area 80 into which a dump semi-trailer is driven. Next, electrical connections are made between a power supply and control unit 15 as well as between truck sensor 18 and control unit 15. Pipes for high-pressure air are then laid out. To compare the powder receiving device of the present invention to a conventional powder receiving device as shown in Figures 1 and 2, in plant 101, powder receiving device 1 is installed in place of conventional receiver hood 103, dust collector 110, suction pipe 111, circulation pipe 112, fan 113, and exhaust opening 115.

The housing for the powder receiving device 1 can be formed from any suitable material, preferably a light metal, more preferably, aluminum plates. The use of aluminum plates makes the device lighter, allowing installation in large-scale plants without the need for reinforcements. The device is assembled with internally bent materials using bolts and nuts. Welding is avoided as much as possible. Thus, the cosmetic appearance is improved by having a housing substantially free from external projecting elements. Also, transportation of the device is relatively easy, since the device is assembled as a single unit at a production plant before transporting to a powder/feed plant or the like. Installation in the plant simply involves connecting the wiring, high-pressure air pipes, and the like. The ease of installation significantly reduces installation time.

The receiving device 1, installed in a receiving section of powder/feed plant 101 in the manner described above, is placed in a standby state by turning on power to control panel 15f (see Figure 8). The receiving operation or transfer is performed based on a program stored beforehand in control unit 15.

Referring to Figures 8 through 10, when power to control panel 15f is turned on, CPU 15a begins the receiving operation and control goes to step 100. CPU 15a repeatedly checks truck sensor 18 (see Figures 10 through 13). CPU 15a waits for truck sensor 18 to be turned ON. When dump semi-trailer 17 enters the powder receiving section and passes truck sensor 18, truck sensor 18 detects the entry of dump semi-trailer 17, sending a signal to control unit 15. As a result, step 100 determines that truck sensor 18 has been turned ON. If a NO is returned, the operation is repeated.

When control proceeds to step 110, CPU 15a sends an open signal to actuator 3b, opening automatic opening/closing gate 3. Automatic opening/closing gate 3 protects the powder loading process from horizontal air currents. At step 120, a drive signal is sent to suction motor fan 8, creating a negative pressure inside filter 6. At step 130, CPU 15a sends a drive signal to electromagnetic valve 14a to perform flushing of bag filter 30.

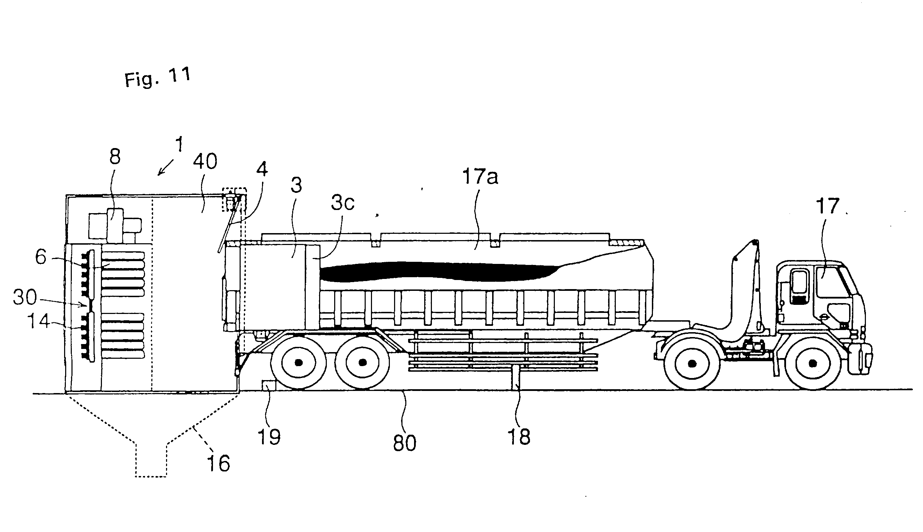

Referring to Figure 11, dump semi-trailer 17 moves container 17a back stopping at a truck stopper 19. Container 17a enters loading opening 2. Seal member 4 is pushed by container 17a, pivoting rearward. Seal member 5 is pushed by container 17a, pivoting frontward. Side surfaces of container 17a are covered by dust-protection vinyl sheets 3c attached to the end of automatic opening/closing gate 3. Thus, the inside of the receiving device 1 is separated from the outside of the receiving device 1.

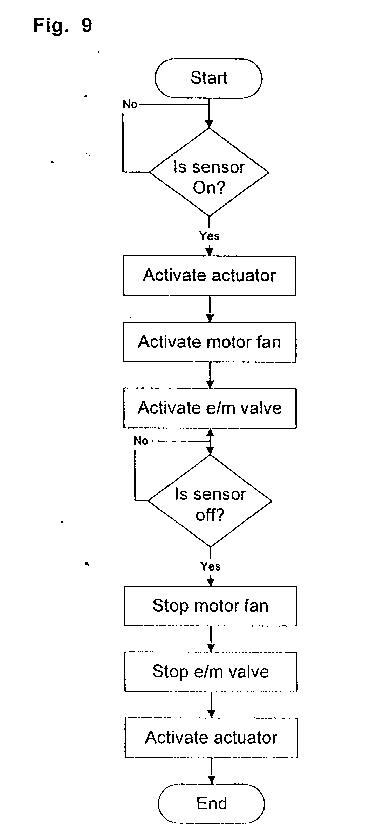

Referring to Figures 9 and 12, when a rear end of container 17a enters completely into the receiving device 1, the driver lifts container 17a. The lifting of container 17a causes powder loaded in container 17a to be dropped into the receiving device 1 from a door 17b disposed on a section of the rear surface of container 17a. Powder moves from outlet hopper 16 into the next section (silo 108 from Figure 1 and the like). At step 120, suction motor fan 8 activates inside the receiving device 1 to perform dust collection by applying a negative pressure to filter 6. Dust arising from powder dropped into the receiving device 1 is kept from escaping by dust collection performed by filter 6, as indicated by the arrows in Figure 12.

Referring to Figures 3 and 9, air is blown out from cleaning air blowing outlet 10a and air curtain blowing outlet 10b to clean container 17a of dump semi-trailer 17. Air blown from air nozzle 12a also increases powder fluidity to help prevent clogging. At step 130, electromagnetic valve 14a activates to perform flushing by sending air pulses to flushing air jet nozzle pipe 14. In response to input from control panel 15f, actuator 9a appropriately adjusts the angle of flap 9.

At step 140, CPU 15a waits for truck sensor 18 to be turned OFF. Once powder from container 17a is completely unloaded, empty container 17a returns to its base. Dump semi-trailer 17 then moves forward, causing sealing members 4 and 5 to be restored by springs to their upright positions.

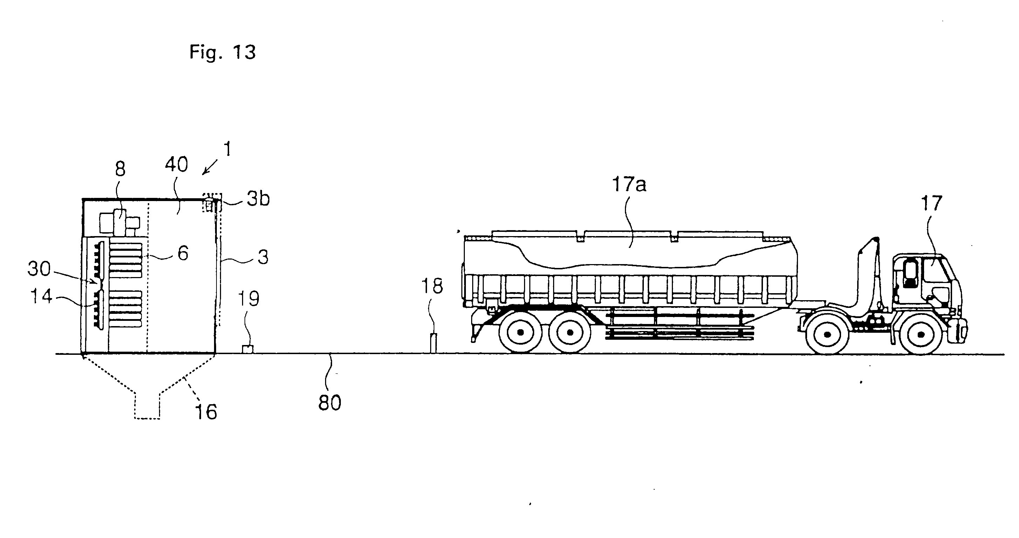

Referring to Figures 9 and 13, dump semi-trailer 17 moves away from the position of truck sensor 18, causing trucking sensor 18 to send an OFF signal. CPU 15a reads this sensor signal to determine whether the sensor signal is now OFF. This operation is repeated if the response is NO.

At step 150, CPU 15a closes automatic opening/closing gate 3 while sending a stop signal to suction motor fan 8 to halt dust collection. At step 160, CPU 15a sends a stop signal to electromagnetic valve 14a to halt flushing operations. As a result, the powder receiving device 1 halts dust collection and flushing operations for bag filter 30. At step 170, CPU 15a sends a close signal to actuator 3b to close automatic opening/closing gate 3. This completes the powder receiving operation. At completion, hopper 16 is empty. Dust cleaning and backwash operations are performed as appropriate to clean out residual powder inside powder receiving device 1.

With the structure described above, the embodiment of the present invention provides a number of advantages. During unloading of powder, the position of bag filter 30 close to the dust source near rear door 17b of container 17a of dump semi-trailer 17 allows for uniform pressure distribution, thus preventing air from stagnating, and providing efficient dust collection. The need for the suction duct of the conventional technology is eliminated and the avoidance of a pressure loss at the duct allows the use of an economical, quiet, and low-power suction motor fan 8. During the receiving operation, dust protection vinyl sheets 3c shield an area behind container 17a of dump semi-trailer 17. This prevents powder from leaking outside. By using an insect screening sheet as dust protection vinyl sheets 3c, insects are prevented from entering into the receiving device 17a from the outside. By using an eccentric sprocket mechanism in automatic opening/closing gate 3 to provide offset timings for the opening and closing of left and right gates, the folding up of dust protection vinyl sheet 3c attached at the end of each gate is facilitated. When the receiving device 1 is idle, automatic opening/closing gate 3 and sealing members 4 and 5 seal off the opening of receiver hood 1a. This prevents powder from flying out, keeping the loading section tidy. When automatic opening/closing gate 3 is open, the receiving operation is protected from horizontal air currents.

The housing of the receiving device 1 is preferably formed by assembling aluminum plate panels. This provides a light yet large device without requiring external reinforcements. Since the main elements such as receiver hood 1a, bag filter 30, and control unit 15 are integrally formed as a single system, transporting the device is made easier. The installation of the unit in a plant involves a modular method where the unit is installed directly in the plant. This greatly reduces the time required for installation. The modular method also facilitates maintenance and cleaning after operation in the plant.

Air from suction motor fan 8 is blown out in the form of an air curtain from cleaning air blowing outlet 10a to container 17a of dump semi-trailer 17. This allows for the cleaning of container 17a. Suction motor fan 8 is covered by receiver hood 1a so that noise during operation is minimized. By having bag filter 30 installed inside powder receiving device 1, residual powder at internal corners of the housing are eliminated and the device can be assembled as a box using bolts and nuts to connect internally bent flanges. This eliminates projections (externally bent flanges and the like) from an outer surface of the housing, improving the appearance of the device while making cleaning easier. Since the angle of flap 9 is adjustable, flow of air within powder receiving device 1 can be freely controlled.

Having described preferred embodiments of the invention with reference to the accompanying drawings, it will understood that the invention is not limited to those precise embodiments, and that various changes and modifications may be effected therein by one skilled in the art without departing from the scope of the invention as defined in the appended claims.

## Claims

1. A powder receiving device (1) comprising a housing having a loading chamber (40) with a loading opening (2) and a powder loading hopper (16), characterised in that the housing has a blower (8) for recirculating air into the said chamber (40) along an air path originating from within the said chamber (40).

2. A powder receiving device (1) according to Claim 1 characterised in that the said air path includes at least one filter (6) for filtering particles of said powder from said air.

3. A powder receiving device (1) according to Claim 2, characterised in that the said at least one filter (6) comprises a bag filter (30).

4. A powder receiving device (1) according to Claim 2 or Claim 3, characterised in that the said housing further has backwash means (14) for directing pulsed jets of air onto the said at least one filter (6), such that particles are dislodged therefrom.

5. A powder receiving device (1) according to any preceding Claim, characterised in that the said housing further has air flow adjustment means for adjusting the path of the recirculated air.

6. A powder receiving device (1) according to Claim 5, characterised in that the said air flow adjustment means comprises an adjustable flap (9) positioned in the air path of the said recirculated air.

7. A powder receiving device (1) according to Claim 6, characterised in that the said flap (9) creates an upper air path and a lower air path within the said housing.

8. A powder receiving device (1) according to Claim 7, characterised in that the said upper air path directs a first portion of air to an outlet (10a, 10b) located at an exterior and/or at an interior surface of the said housing so as to form an air curtain across the said loading opening (2).

9. A powder receiving device (1) according to Claim 7 or Claim 8, characterised in that the said air curtain also directs air toward the said loading hopper (16) such that the flow of powder into the said loading hopper (16) is facilitated.

10. A powder receiving device (1) according to Claims 7 to 9 characterised in that, the said upper air path also directs air to an outlet (10b) located on an exterior surface of the said housing so as to form an air path out of the housing and across a container (17a) from which the powder is to be loaded into the loading chamber (40), such that the flow of powder from the said container (17a) to the said loading chamber (40) is facilitated.

11. A powder receiving device (1) according to any of Claims 7 to 10 characterised in that the said lower air path directs air to an outlet (12a) located on an interior surface of the housing adjacent the said loading hopper (16) such that the flow of powder into the said loading hopper (16) is facilitated.

12. A powder receiving device (1) comprising a housing having a loading chamber (40) with a loading opening (2) and a powder loading hopper (16), characterised in that the housing has a blower (8) for drawing air along an air path originating from within the said chamber and through a filter (6) for filtering particles of said powder from said air and is positioned to allow dislodged particles to be released into the said powder loading hopper (16).

13. A powder receiving device (1) according to any preceding Claim, characterised in that the said loading opening (2) includes sealing members (4, 5) opening and closing said powder loading opening.

14. A powder receiving device (1) according to any preceding Claim, characterised in that the said loading opening (2) includes opening/closing gates (3) opening and closing on an exterior surface of the said sealing members (4, 5).

15. A powder receiving device (1) according to Claim 14, characterised in that it further comprises a dust protection sheet (3c) covering the said opening/closing gate (3).

16. A powder receiving device (1) according to any of Claims 10 to 15 characterised in that it further comprises a sensor (18) for detecting the approach of the said container (17a), and means for automatically opening and closing the said powder loading opening when the said container (17a) is detected.

17. A powder receiving device (1) according to Claims 14 or 15, further comprising an eccentric sprocket mechanism for opening and closing the said opening/closing gates (3).
